# EUROPEAN PATENT APPLICATION

(11) **EP 4 443 294 A1**
(43) Date of publication of application: **09.10.2024**
(21) Application number: 22903048.1
(22) Date of filing: 25.10.2022
(51) Int. Cl.: G06F 9/48

(54) **TASK OPTIMIZATION METHOD AND APPARATUS, AND COMPUTER READABLE STORAGE MEDIUM**

(30) Priority: 06.12.2021 CN 202111482034
(71) Applicant: ZTE Corporation, Shenzhen, Guangdong 518057 (CN)
(72) Inventor: YAO, Chao, Shenzhen, Guangdong 518057 (CN)
(74) Representative: WBH Wachenhausen Patentanwälte PartG mbB
(86) International application number: PCT/CN2022/127443
(87) International publication number: WO 2023/103624

(57) **Abstract**

The present application discloses a task optimization method and apparatus, and a computer readable storage medium. The task optimization method comprises: evaluating tasks and identifying a target task that needs to be optimized (101); adjusting target task parameters corresponding to the target task (102); executing the target task parameters by means of virtual scheduling to perform global scheduling preview (103); and when a preview effect of a task preview meets an expectation, determining the targe task parameters, and executing the target task on the basis of the target task parameters (104).

## Description

### CROSS-REFERENCE TO RELATED APPLICATION

This application is filed on the basis of Chinese patent application No. 202111482034.5 filed December 06, 2021, and claims priority to the Chinese patent application, the entire contents of which are incorporated herein by reference.

### TECHNICAL FIELD

Embodiments of the present disclosure relate to, but not limited to, the technical field of information, and in particular, to a task optimization method and apparatus, and a computer-readable storage medium.

### BACKGROUND

A data middle platform sets up unified standards at the enterprise level, interconnects enterprise data channels, breaks through the information island effect, and reduces the costs of redundant construction. It can not only quickly provide data service support for different business departments, but also reduce the load of the back-end and improve the overall operating efficiency and quality.

There are a large number of data processing tasks running on the data middle platform. These tasks constitute a huge Directed Acyclic Graph (DAG). Some tasks process basic data that many follow-up tasks rely upon, some tasks are required to output a result within a specified time, and so on. In addition, these tasks are usually developed by different teams and therefore are of different quality. To ensure the running of their own tasks, each team usually applies for higher task resources and priorities, which lacks a holistic view and is not conducive to the overall efficiency.

At present, task optimization generally focuses on tasks requiring a long running time or a large number of resources, but the running time or the number of resources alone does not necessarily mean that there is a problem with the task. In addition, whether optimization of a single task has an impact on the overall efficiency usually needs to be tested in practice. The testing process requires a long cycle and high costs of trial and error, affecting the efficiency and success rate of task optimization.

### SUMMARY

The following is a summary of the subject matter set forth in the description. This summary is not intended to limit the scope of protection of the claims.

Embodiments of the present disclosure provide a task optimization method and apparatus, and a computer-readable storage medium.

In accordance with a first aspect of the present disclosure, an embodiment provides a task optimization method, including: evaluating tasks to identify a target task to be optimized; adjusting a target task parameter corresponding to the target task; executing the target task parameter by virtual scheduling to perform global scheduling speculation; and determining the target task parameter in response to a speculation effect of the global scheduling speculation meeting an expectation, and executing the target task based on the target task parameter.

In accordance with a second aspect of the present disclosure, an embodiment provides a task optimization apparatus, including a memory, a processor, and a computer program stored in the memory and executable by the processor, where the computer program, when executed by the processor, causes the processor to implement the task optimization method in accordance with the first aspect.

In accordance with a third aspect of the present disclosure, an embodiment provides an electronic device, including a memory, a processor, and a computer program stored in the memory and executable by the processor, where the computer program, when executed by the processor, causes the processor to implement the task optimization method in accordance with the first aspect.

In accordance with a fourth aspect of the present disclosure, an embodiment provides a computer-readable storage medium, storing a computer-executable program which, when executed by a computer, causes the computer to implement the task optimization method in accordance with the first aspect.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims, and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.
FIG. 1 is a main flowchart of a task optimization method according to an embodiment of the present disclosure;
FIG. 2 is a detailed flowchart of a task optimization method according to an embodiment of the present disclosure;
FIG. 3 is a detailed flowchart of a task optimization method according to an embodiment of the present disclosure;
FIG. 4 is a detailed flowchart of a task optimization method according to an embodiment of the present disclosure;
FIG. 5 is a diagram showing a DAG of tasks obtained by initial task evaluation according to an embodiment of the present disclosure;
FIG. 6 is a diagram showing a DAG of tasks subjected to a first pre-optimization according to an embodiment of the present disclosure;
FIG. 7 is a diagram showing a DAG of tasks subjected to a second pre-optimization according to an embodiment of the present disclosure;
FIG. 8 is a schematic structural diagram of a task optimization apparatus according to an embodiment of the present disclosure; and
FIG. 9 is a schematic structural diagram of an electronic device according to an embodiment of the present disclosure.

### DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It should be understood that in the description of the embodiments of the present disclosure, the term "plurality of" (or multiple) means at least two, the term such as "greater than", "less than", "exceed" or variants thereof prior to a number or series of numbers is understood to not including the number adjacent to the term. The term "at least" prior to a number or series of numbers is understood to include the number adjacent to the term "at least", and all subsequent numbers or integers that could logically be included, as clear from context. If used herein, the terms such as "first", "second" and the like used herein are merely used for distinguishing technical features, and are not intended to indicate or imply relative importance, or implicitly point out the number of the indicated technical features, or implicitly point out a precedence order of the indicated technical features.

A data middle platform sets up unified standards at the enterprise level, interconnects enterprise data channels, breaks through the information island effect, and reduces the costs of redundant construction. It can not only quickly provide data service support for different business departments, but also reduce the load of the back-end and improve the overall operating efficiency and quality.

There are a large number of data processing tasks running on the data middle platform. These tasks constitute a huge DAG. Some tasks process basic data that many follow-up tasks rely upon, some tasks are required to output a result within a specified time, and so on. In addition, these tasks are usually developed by different teams and therefore are of different quality. To ensure the running of their own tasks, each team usually applies for higher task resources and priorities, which lacks a holistic view and is not conducive to the overall efficiency.

At present, task optimization generally focuses on tasks requiring a long running time or a large number of resources, but the running time or the number of resources alone does not necessarily mean that there is a problem with the task. In addition, whether optimization of a single task has an impact on the overall efficiency usually needs to be tested in practice. The testing process requires a long cycle and high costs of trial and error, affecting the efficiency and success rate of task optimization.

To solve the problem of indiscriminate optimization in existing technologies, embodiments of the present disclosure provide a task optimization method and apparatus, and a computer-readable storage medium. According to the method, tasks are evaluated and a target task to be optimized is identified; a target task parameter corresponding to the target task is adjusted; the target task parameter is executed by virtual scheduling to perform global scheduling speculation; and the target task parameter is determined when a speculation effect of the global scheduling speculation meets an expectation, and the target task is executed based on the target task parameter. Based on this, the tasks are evaluated to identify the task to be optimized. An optimal task optimization mode can be quickly found through iteration by adjusting the task parameter and performing global scheduling speculation by virtual scheduling, such that the efficiency and success rate of task optimization can be improved, thereby avoiding indiscriminate optimizations which cannot achieve a satisfactory optimization effect. Therefore, the present disclosure can find out an optimal task parameter globally, to ensure that the data output capability of the entire data middle platform system can reach an ideal target state.

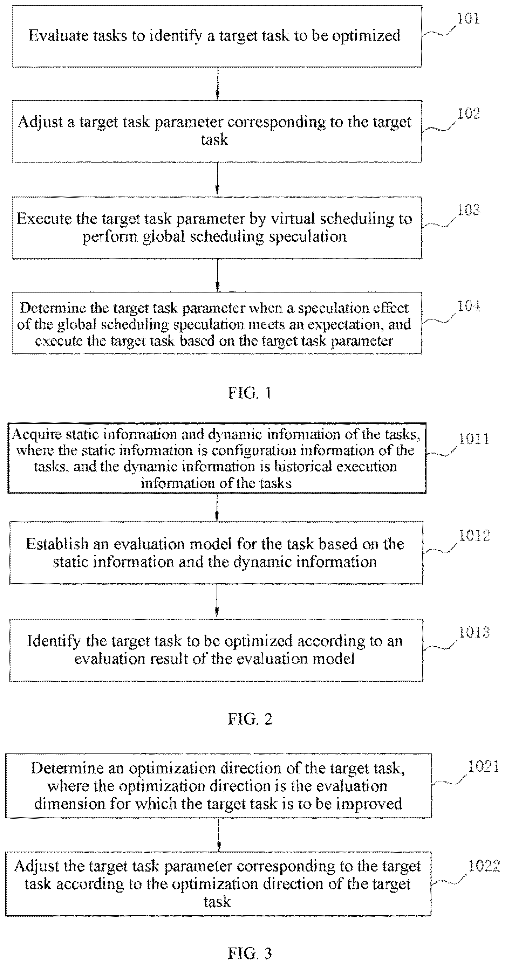

FIG. 1 is a flowchart of a task optimization method according to an embodiment of the present disclosure. The task optimization method includes, but not limited to, the following steps.

In a step of 101, tasks are evaluated and a target task to be optimized is identified.

In a step of 102, a target task parameter corresponding to the target task is adjusted.

In a step of 103, the target task parameter is executed by virtual scheduling to perform global scheduling speculation.

In a step of 104, the target task parameter is determined when a speculation effect of the global scheduling speculation meets an expectation, and the target task is executed based on the target task parameter.

It can be understood that, the method may be used to optimize tasks that are run on a data middle platform. According to the method, tasks are evaluated and a target task to be optimized is identified; a target task parameter corresponding to the target task is adjusted; the target task parameter is executed by virtual scheduling to perform global scheduling speculation; and the target task parameter is determined when a speculation effect of the global scheduling speculation meets an expectation, and the target task is executed based on the target task parameter. Based on this, the tasks are evaluated to identify the task to be optimized. An optimal task optimization mode can be quickly found through iteration by adjusting the task parameter and performing global scheduling speculation by virtual scheduling, such that the efficiency and success rate of task optimization can be improved, thereby avoiding indiscriminate optimizations which cannot achieve a satisfactory optimization effect. Therefore, the present disclosure can find out an optimal task parameter globally, to ensure that the data output capability of the entire data center system can reach an ideal target state. It should be noted that the task identification and adjustment may be performed manually or automatically through machine learning.

It can be understood that evaluating the tasks and thereby identifying the target task to be optimized may be implemented by acquiring static information and dynamic information of each of the tasks, establishing an evaluation model for the task based on the static information and the dynamic information, and identifying the target task to be optimized according to an evaluation result of the evaluation model. It should be noted that the static information is configuration information of the task. For example, the static information may include, but not limited to, an input table, an output table, a resource ratio, a task priority, a scheduling period, etc. The dynamic information is historical execution information of the task. For example, the dynamic information may include, but not limited to, a historical average execution time, an average start-up delay, an average data processing volume, a degree to which the task is relied upon, etc.

It can be understood that the evaluation model for the task may be expressed as: S(task evaluation dimensions) = Exec(task influencing factors), where S represents an evaluation of several dimensions of the task, and Exec represents a fitted task execution model, which can infer a value of each evaluation dimension according to several influencing factors. For example, the evaluation model for the task established according to the static information and the dynamic information of the task is: S(importance, algorithm efficiency, delay, duration) = Exec(dependency relationship, algorithm efficiency, priority, resource ratio), where the dependency relationship represents a lineage relationship of the task, the importance is defined as a total number of follow-up tasks that directly or indirectly rely on the task, and the algorithm efficiency represents the volume of data that can be processed per unit resource and per unit time.

It can be understood that in the present disclosure, the static information and the dynamic information of each task may be acquired, and an evaluation model for the task can be established according to the information of the task: S(task evaluation dimensions) = Exec(task influencing factors), where S represents an evaluation of several dimensions of the task, and Exec represents a fitted task execution model, which can infer a value of each evaluation dimension according to several influencing factors. The target task to be optimized is identified according to the evaluation result. The identification may be performed manually or automatically according to a rule. For the identified task to be optimized, the target task parameter of the task execution model is adjusted according to an optimization direction. The optimization direction is an evaluation dimension to be improved. Global scheduling speculation is performed by virtual scheduling using the adjusted task execution model. If a speculation effect of the global scheduling speculation meets an expectation, the adjusted task configuration is applied to a production system; otherwise, the parameter of the task execution model is further adjusted for optimization. Based on this, according to the present disclosure, tasks to be optimized can be identified globally, and task parameters can be optimized by performing global scheduling speculation by virtual scheduling, thereby improving the operating efficiency of the system.

As shown in FIG. 2, step 101 may include, but not limited to, the following steps.

In a step of 1011, static information and dynamic information of each of the tasks are acquired, where the static information is configuration information of the task, and the dynamic information is historical execution information of the task.

In a step of 1012, an evaluation model for the task is established based on the static information and the dynamic information.

In a step of 1013, the target task to be optimized is identified according to an evaluation result of the evaluation model.

It can be understood that the static information of the task may be acquired from the configuration information of the task. The static information may include, but not limited to, an input table, an output table, a resource ratio, a task priority, a scheduling period, etc. The historical execution information of the task may be acquired from execution logs of the task. The dynamic information may include, but not limited to, a historical average execution time, an average start-up delay, an average data processing volume, a degree to which the task is relied upon, etc.

It can be understood that evaluation dimensions and influencing factors of the task may be determined according to the static information and the dynamic information, and then the evaluation model for the task may be established according to the evaluation dimensions and the influencing factors. The evaluation model for the task may be expressed as: S(task evaluation dimensions) = Exec(task influencing factors), where S represents an evaluation of several dimensions of the task, and Exec represents a fitted task execution model, which can infer a value of each evaluation dimension according to several influencing factors. For example, the evaluation model for the task established according to the static information and the dynamic information of the task is S(importance, algorithm efficiency, delay, duration) = Exec(dependency relationship, algorithm efficiency, priority, resource ratio), where the dependency relationship represents a lineage relationship of the task, the importance is defined as a total number of follow-up tasks that directly or indirectly rely on the task, and the algorithm efficiency represents the volume of data that can be processed per unit resource and per unit time. Based on this, according to the present disclosure, the optimization effect can be quickly simulated by establishing a task evaluation model and performing virtual scheduling, thereby improving the overall efficiency of task optimization. The multi-dimensional task evaluation provides effective guidance for the direction of task optimization.

It can be understood that in the present disclosure, task evaluation information concerned by users is associated with a simplified execution model by establishing a task evaluation model. Tasks to be optimized can be quickly identified according to the evaluation information and a service objective. An optimal task optimization mode can be quickly found through iteration by adjusting the task parameter and performing task speculation in a virtual scheduling engine, such that the efficiency and success rate of task optimization can be improved, thereby avoiding indiscriminate optimizations which cannot achieve a satisfactory optimization effect.

As shown in FIG. 3, step 102 may include, but not limited to, the following steps.

In a step of 1021, an optimization direction of the target task is determined, where the optimization direction is the evaluation dimension for which the target task is to be improved.

In a step of 1022, the target task parameter corresponding to the target task is adjusted according to the optimization direction of the target task.

It can be understood that for the identified task to be optimized, the target task parameter of the task execution model is adjusted according to an optimization direction. The optimization direction is an evaluation dimension to be improved. The evaluation dimension may include, but not limited to, importance, algorithm efficiency, delay, duration, etc. For example, when the algorithm efficiency falls within a normal range but the duration is too long, more resources need to be used. If the delay is too large, the scheduling logic needs to be optimized. The corresponding target task parameter of the target task is adjusted according to the evaluation dimension for which the target task is to be improved.

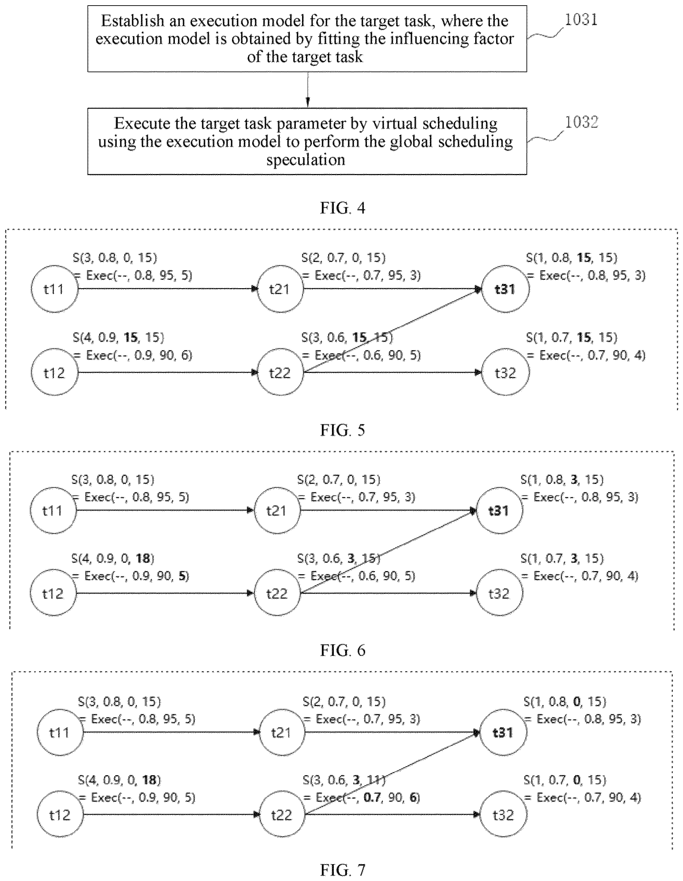

As shown in FIG. 4, step 103 may include, but not limited to, the following steps.

In a step of 1031, an execution model for the target task is established, where the execution model is obtained by fitting the influencing factor of the target task.

In a step of 1032, the target task parameter is executed by virtual scheduling using the execution model to perform the global scheduling speculation.

It can be understood that the influencing factor of the task may include, but not limited to, dependency relationship, algorithm efficiency, priority, resource ratio, etc. Exec represents a fitted task execution model, which can infer a value of each evaluation dimension according to several influencing factors. The evaluation model for the task is: S(importance, algorithm efficiency, delay, duration) = Exec(dependency relationship, algorithm efficiency, priority, resource ratio), where the dependency relationship represents a lineage relationship of the task, the importance is defined as a total number of follow-up tasks that directly or indirectly rely on the task, and the algorithm efficiency represents the volume of data that can be processed per unit resource and per unit time. The target task parameter is executed by virtual scheduling using the execution model to perform the global scheduling speculation. Based on this, according to the present disclosure, the optimization effect can be quickly simulated by performing global scheduling speculation by virtual scheduling using the adjusted task execution model, thereby improving the overall efficiency of task optimization.

In the present disclosure, task evaluation information concerned by users is associated with a simplified execution model by establishing a task evaluation model. Tasks to be optimized can be quickly identified according to the evaluation information and a service objective. An optimal task optimization mode can be quickly found through iteration by adjusting the task parameter and performing task speculation in a virtual scheduling engine, such that the efficiency and success rate of task optimization can be improved, thereby avoiding indiscriminate optimizations which cannot achieve a satisfactory optimization effect.

The task optimization method provided in the present disclosure is further described below in conjunction with the accompanying drawings and specific embodiments.

Using simplified tasks in a data middle platform as an example, it is assumed that the total number of resources in the data middle platform is 10. Corresponding seps to realize task optimization are as follows.
a - the static information of each task is acquired mainly from configuration information, and dynamic information, i.e., historical execution information of each task is acquired from execution logs of the task. The static information includes an input table, an output table, a resource ratio, a task priority, a scheduling period, etc. The dynamic information may include a historical average execution time, an average start-up delay, an average data processing volume, a degree to which the task is relied upon, etc.
b - the evaluation model for each task is established based on the static information and the dynamic information of the task. FIG. 5 shows an overall DAG of the tasks.
c - the target task to be optimized is identified according to the evaluation result. An optimization goal is defined to be optimizing a start-up delay of t31. Accordingly, t12 and t22 are identified as tasks to be optimized.
d - t12 is optimized first. Execution of t12 with a low priority needs to wait for completion of t11 due to insufficient resources and therefore is delayed.
   ① speculation is performed after the priority of t12 is adjusted to 100, while the delays of t12 and t22 become 0, but as a delay of t31 does not change due to the increase of delays of t11 and t21, this adjustment is not adopted.
   ② speculation is performed after resources for 112 are reduced to 5, as shown in FIG. 6, as the delay of t31 is reduced to 3, this optimization mode is adopted.
e - because it is difficult to optimize the next parameter, i.e., efficiency, of t12 on the basis of the previous step, t22 is optimized.
   ① when the number of resources for t22 is adjusted to 6, the delay of t31 is reduced to 1, so this optimization mode is adopted and a next parameter of t22 is further optimized.
   ② because algorithm efficiency of t22 is low, speculation is performed by improving the algorithm efficiency of t22 to 0.7, as shown in FIG. 7, the delay of t31 is reduced to 0, so this optimization mode is adopted.
f - the adjusted task configuration in which the number of resources for t11 is reduced and the number of resources for t22 is increased is applied to the production system.

It should be noted that the steps c, d, and e may be performed manually or automatically by a program.

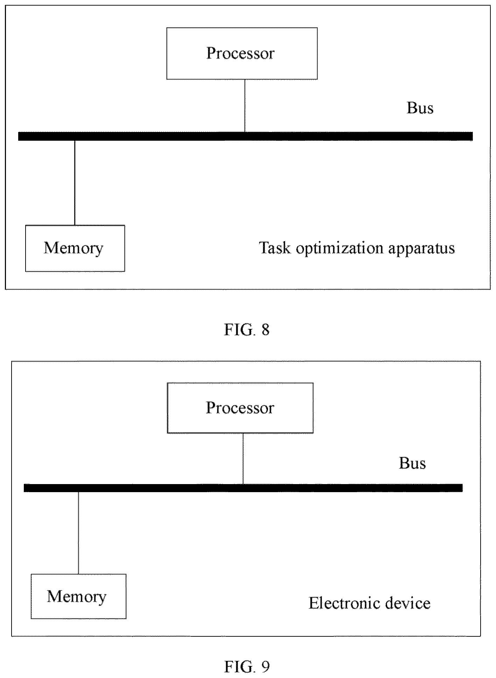

As shown in FIG. 8, an embodiment of the present disclosure provides a task optimization apparatus.

In some embodiments, the task optimization apparatus includes one or more processors and one or more memories. FIG. 8 uses one processor and one memory as an example. The processor and the memory may be connected by a bus or in other ways. Connection by a bus is used as an example in FIG. 8.

The memory, as a non-transitory computer-readable storage medium, may be configured for storing a non-transitory software program and a non-transitory computer-executable program, for example, the task optimization method in the embodiments of the present disclosure. The processor executes the non-transitory software program and the non-transitory computer-executable program stored in the memory, to implement the task optimization method in the embodiments of the present disclosure.

The memory may include a program storage area and a data storage area. The program storage area may store an operating system, and an application required by at least one function. The data storage area may store data and the like required for executing the task optimization method in the embodiments of the present disclosure. In addition, the memory may include a highspeed random access memory, and may also include a non-transitory memory, e.g., at least one magnetic disk storage device, flash memory device, or other non-transitory solid-state storage device. In some implementations, the memory may include memories located remotely from the processor, and the remote memories may be connected to the task optimization apparatus via a network. Examples of the network include, but not limited to, the Internet, an intranet, a local area network, a mobile communication network, and combinations thereof.

The non-transitory software program and the non-transitory computer-executable program required for implementing the task optimization method in the embodiments of the present disclosure are stored in the memory which, when executed by one or more processors, cause the one or more processors to implement the task optimization method in the embodiments of the present disclosure, for example, implement the method steps 101 to 104 in FIG. 1, the method steps 1011 to 1013 in FIG. 2, the method steps 1021 to 1022 in FIG. 3, or the method steps 1031 to 1032 in FIG. 4. According to the method, tasks are evaluated and a target task to be optimized is identified; a target task parameter corresponding to the target task is adjusted; the target task parameter is executed by virtual scheduling to perform global scheduling speculation; and the target task parameter is determined when a speculation effect of the global scheduling speculation meets an expectation, and the target task is executed based on the target task parameter. Based on this, the tasks are evaluated to identify the task to be optimized. An optimal task optimization mode can be quickly found through iteration by adjusting the task parameter and performing global scheduling speculation by virtual scheduling, such that the efficiency and success rate of task optimization can be improved, thereby avoiding indiscriminate optimizations which cannot achieve a satisfactory optimization effect. Therefore, the present disclosure can find out an optimal task parameter globally, to ensure that the data output capability of the entire data middle platform system can reach an ideal target state.

As shown in FIG. 9, an embodiment of the present disclosure provides an electronic device.

In some embodiments, the electronic device includes one or more processors and one or more memories. FIG. 9 uses one processor and one memory as an example. The processor and the memory may be connected by a bus or in other ways. Connection by a bus is used as an example in FIG. 9.

The memory, as a non-transitory computer-readable storage medium, may be configured for storing a non-transitory software program and a non-transitory computer-executable program, for example, the task optimization method in the embodiments of the present disclosure. The processor executes the non-transitory software program and the non-transitory computer-executable program stored in the memory, to implement the task optimization method in the embodiments of the present disclosure.

The memory may include a program storage area and a data storage area. The program storage area may store an operating system, and an application required by at least one function. The data storage area may store data and the like required for executing the task optimization method in the embodiments of the present disclosure. In addition, the memory may include a highspeed random access memory, and may also include a non-transitory memory, e.g., at least one magnetic disk storage device, flash memory device, or other non-transitory solid-state storage device. In some implementations, the memory may include memories located remotely from the processor, and the remote memories may be connected to the task optimization apparatus via a network. Examples of the network include, but not limited to, the Internet, an intranet, a local area network, a mobile communication network, and combinations thereof.

The non-transitory software program and the non-transitory computer-executable program required for implementing the task optimization method in the embodiments of the present disclosure are stored in the memory which, when executed by one or more processors, cause the one or more processors to implement the task optimization method in the embodiments of the present disclosure, for example, implement the method steps 101 to 104, the method steps 1011 to 1013 in FIG. 2, the method steps 1021 to 1022 in FIG. 3, or the method steps 1031 to 1032 in FIG. 4. According to the method, tasks are evaluated and a target task to be optimized is identified; a target task parameter corresponding to the target task is adjusted; the target task parameter is executed by virtual scheduling to perform global scheduling speculation; and the target task parameter is determined when a speculation effect of the global scheduling speculation meets an expectation, and the target task is executed based on the target task parameter. Based on this, the tasks are evaluated to identify the task to be optimized. An optimal task optimization mode can be quickly found through iteration by adjusting the task parameter and performing global scheduling speculation by virtual scheduling, such that the efficiency and success rate of task optimization can be improved, thereby avoiding indiscriminate optimizations which cannot achieve a satisfactory optimization effect. Therefore, the present disclosure can find out an optimal task parameter globally, to ensure that the data output capability of the entire data middle platform system can reach an ideal target state.

In addition, an embodiment of the present disclosure provides a computer-readable storage medium, storing a computer-executable program. The computer-executable program, when executed by one or more control processors, for example, by a processor in FIG. 8, may cause the one or more processors to implement the task optimization method in the embodiments of the present disclosure, for example, implement the method steps 101 to 104, the method steps 1011 to 1013 in FIG. 2, the method steps 1021 to 1022 in FIG. 3, or the method steps 1031 to 1032 in FIG. 4. According to the method, tasks are evaluated and a target task to be optimized is identified; a target task parameter corresponding to the target task is adjusted; the target task parameter is executed by virtual scheduling to perform global scheduling speculation; and the target task parameter is determined when a speculation effect of the global scheduling speculation meets an expectation, and the target task is executed based on the target task parameter. Based on this, the tasks are evaluated to identify the task to be optimized. An optimal task optimization mode can be quickly found through iteration by adjusting the task parameter and performing global scheduling speculation by virtual scheduling, such that the efficiency and success rate of task optimization can be improved, thereby avoiding indiscriminate optimizations which cannot achieve a satisfactory optimization effect. Therefore, the present disclosure can find out an optimal task parameter globally, to ensure that the data output capability of the entire data middle platform system can reach an ideal target state.

An embodiment of the present disclosure includes: evaluating tasks to identify a target task to be optimized; adjusting a target task parameter corresponding to the target task; executing the target task parameter by virtual scheduling to perform global scheduling speculation; and determining the target task parameter when a speculation effect of the global scheduling speculation meets an expectation, and executing the target task based on the target task parameter. Based on this, the tasks are evaluated to identify the task to be optimized. An optimal task optimization mode can be quickly found through iteration by adjusting the task parameter and performing global scheduling speculation by virtual scheduling, such that the efficiency and success rate of task optimization can be improved, thereby avoiding indiscriminate optimizations which cannot achieve a satisfactory optimization effect. Therefore, the present disclosure can find out an optimal task parameter globally, to ensure that the data output capability of the entire data middle platform system can reach an ideal target state.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as a computer-readable program, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and which can be accessed by a computer. In addition, as is known to those having ordinary skills in the art, the communication medium typically includes a computer-readable program, data structures, program modules, or other data in a modulated data signal such as a carrier or other transport mechanism, and may include any information delivery medium.

Although some embodiments of the present disclosure have been described above, the present disclosure is not limited to the implementations described above. Those having ordinary skills in the art can make various equivalent modifications or replacements without departing from the essence of the present disclosure. Such equivalent modifications or replacements fall within the scope defined by the claims of the present disclosure.

## Claims

1. A task optimization method, comprising:
evaluating tasks to identify a target task to be optimized;
adjusting a target task parameter corresponding to the target task;
executing the target task parameter by virtual scheduling to perform global scheduling speculation; and
determining the target task parameter in response to a speculation effect of the global scheduling speculation meeting an expectation, and executing the target task based on the target task parameter.

2. The method of claim 1, wherein evaluating tasks to identify a target task to be optimized comprises:
acquiring static information and dynamic information of the tasks, wherein the static information is configuration information of the tasks, and the dynamic information is historical execution information of the tasks;
establishing an evaluation model for the tasks based on the static information and the dynamic information; and
identifying the target task to be optimized according to an evaluation result of the evaluation model.

3. The method of claim 2, wherein the static information comprises at least one of:
a task input table; or
a task output table; or
a task resource ratio; or
a task priority; or
a task scheduling period.

4. The method of claim 2, wherein the dynamic information comprises at least one of:
a historical average execution time of the task; or
an average start-up delay of the task; or
an average data processing volume of the task; or
a degree to which the task is relied upon.

5. The method of claim 2, wherein establishing an evaluation model for the tasks based on the static information and the dynamic information comprises:
determining an evaluation dimension of the tasks and an influencing factor of the tasks based on the static information and the dynamic information; and
establishing the evaluation model according to the evaluation dimension and the influencing factor.

6. The method of claim 5, wherein adjusting a target task parameter corresponding to the target task comprises:
determining an optimization direction of the target task, wherein the optimization direction is the evaluation dimension for which the target task is to be improved; and
adjusting the target task parameter corresponding to the target task according to the optimization direction of the target task.

7. The method of claim 6, wherein executing the target task parameter by virtual scheduling to perform global scheduling speculation comprises:
establishing an execution model for the target task, wherein the execution model is obtained by fitting the influencing factor of the target task; and
executing the target task parameter by virtual scheduling using the execution model to perform the global scheduling speculation.

8. A task optimization apparatus, comprising a memory, a processor, and a computer program stored in the memory and executable by the processor, wherein the computer program, when executed by the processor, causes the processor to perform the task optimization method of any one of claims 1 to 7.

9. An electronic device, comprising a memory, a processor, and a computer program stored in the memory and executable by the processor, wherein the computer program, when executed by the processor, causes the processor to perform the task optimization method of any one of claims 1 to 7.

10. A computer-readable storage medium, storing a computer-executable program which, when executed by a computer, causes the computer to perform the task optimization method of any one of claims 1 to 7.
